# EUROPEAN PATENT APPLICATION

(11) **EP 2 487 403 A1**
(43) Date of publication of application: **15.08.2012**
(21) Application number: 10810815.0
(22) Date of filing: 28.01.2010
(51) Int. Cl.: F21S 2/00, F21Y 101/02

(54) **LIGHT SOURCE MODULE AND ELECTRONIC APPARATUS PROVIDED WITH SAME**

(30) Priority: 07.10.2009 JP 2009233920
(71) Applicant: Sharp Kabushiki Kaisha, Osaka-shi Osaka 545-8522 (JP)
(72) Inventor: NISHIOKA, Sumito, Osaka 545-8522 (JP); KURIMOTO, Eiji, Osaka 545-8522 (JP); IKUTA, Kazuya, Osaka 545-8522 (JP)
(74) Representative: Müller - Hoffmann & Partner
(86) International application number: PCT/JP2010/000493
(87) International publication number: WO 2011/043000

(57) **Abstract**

A light source module (1) capable of preventing LED light from leaking from a gap between light-guiding members includes: light-guiding members (3) aligned in parallel with each other in a long side direction of the light-guiding members (3) with a gap between adjacent light-guiding members (3), and LEDs (4) each for causing light to be incident to at least one end face (8) of the light-guiding member (3) in the long side direction. A cross section of the light-guiding member (3) taken along a direction perpendicular to the long side direction of the light-guiding member (3) is designed such that a side edge (7) of the cross section is thinner than a central portion (9) of the cross section, and between adjacent light-guiding members (3), there is provided a light-shielding member (2) for preventing light from the LED (4) from leaking into a gap between said adjacent light-guiding members (3).

## Description

### Technical Field

The present invention relates to: a light source module including a plurality of light-guiding members aligned in parallel with each other in a long side direction of the plurality of light-guiding members with a gap between adjacent ones of the plurality of light-guiding members and a plurality of light sources each for causing light to be incident to at least one end face of the light-guiding member in the long side direction; and to an electronic device including the light source module.

### Background Art

Patent Literature 1 discloses a liquid crystal display device including a liquid crystal panel in which an illuminating device emits light. The illuminating device includes: a light-guiding plate consisting of a plurality of blocks (light-guiding members) aligned in a line; and a plurality of light sources which respectively correspond to the plurality of blocks and which emit light to the plurality of blocks. A distance between adjacent blocks (light-guiding members) should be approximately 1-2 mm in consideration of thermal expansion and a production tolerance of the light-guiding member.

### Citation List

### [Patent Literature]

[Patent Literature 1] Japanese Patent Application Publication No. 2008-34372 (published on February 14, 2008)

### Summary of Invention

### Technical Problem

However, in a case of employing a T-shaped light-guiding member including a thick central portion and a thin side edge to eliminate gap unevenness between light-guiding members, if a reflector structure using a light-guiding member of a normal edge light type is employed, there occurs a problem that light leaks into a gap between light-guiding members at a portion where LED light is incident, making edges of a screen brighter and causing luminance unevenness.

An object of the present invention is to provide: a light source module capable of preventing LED light from leaking into a gap between light-guiding members; and an electronic device including the light source module.

### Solution to Problem

A light source module of the present invention includes:
a plurality of light-guiding members aligned in parallel with each other in a long side direction of the plurality of light-guiding members with a gap between adjacent ones of the plurality of light-guiding members, and a plurality of light sources each for causing light to be incident to at least one end face of the light-guiding member in the long side direction,
a cross section of the light-guiding member taken along a direction perpendicular to the long side direction of the light-guiding member being designed such that at least one side edge of the cross section is thinner than the other side edge or a central portion of the cross section, and between adjacent ones of the plurality of light-guiding members, there being provided a light-shielding member for preventing light from the light source from leaking into a gap between said adjacent ones of the plurality of light-guiding members.

With the above feature, light from the light source is blocked by the light-shielding member provided between adjacent ones of the plurality of light-guiding members. Consequently, it is possible to prevent LED light from leaking into a gap between said adjacent ones of the plurality of light-guiding members.

In order to solve the foregoing problem, an electronic device of the present invention includes the above light source module.

With the arrangement, it is possible to provide an electronic device including a light source module capable of preventing LED light from leaking into a gap between light-guiding members.

### Advantageous Effects of Invention

The light source module of the present invention is designed such that between adjacent ones of the plurality of light-guiding members, there is provided a light-shielding member for preventing light from the light source from leaking into a gap between said adjacent ones of the plurality of light-guiding members. Further, as described above, the electronic device of the present invention includes the light source module. Consequently, it is possible to provide a light source module capable of preventing LED light from leaking into a gap between adjacent light-guiding members, and an electronic device including the light source module.

### Brief Description of Drawings

Fig. 1

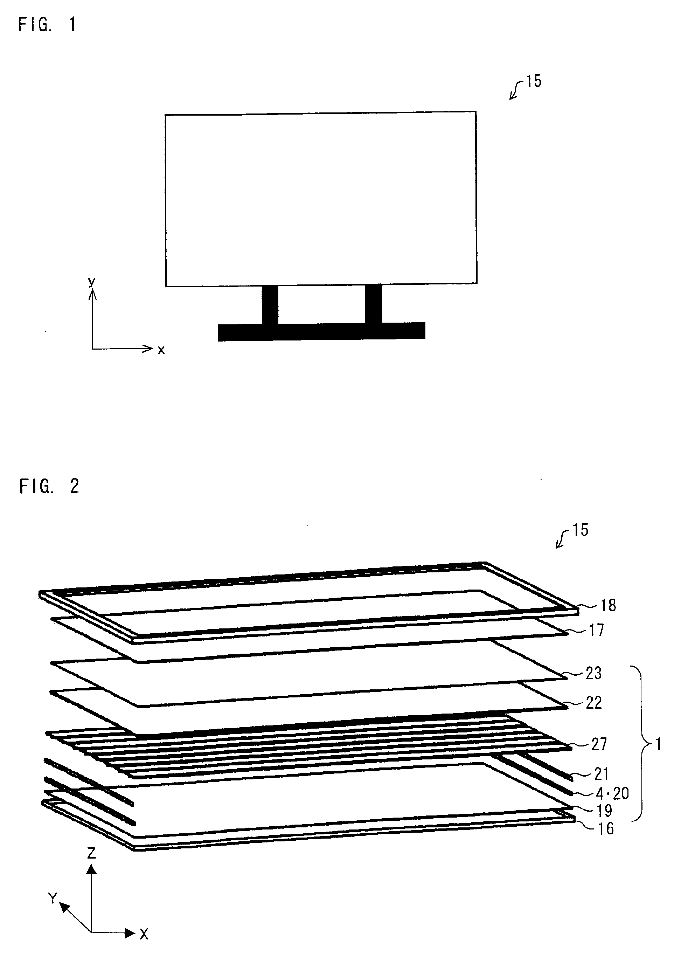

   Fig. 1 is an elevational drawing showing an outer appearance of a liquid crystal display device in accordance with an embodiment of the present invention.
Fig. 2
   Fig. 2 is an exploded perspective drawing showing a configuration of the liquid crystal display device.
Fig. 3

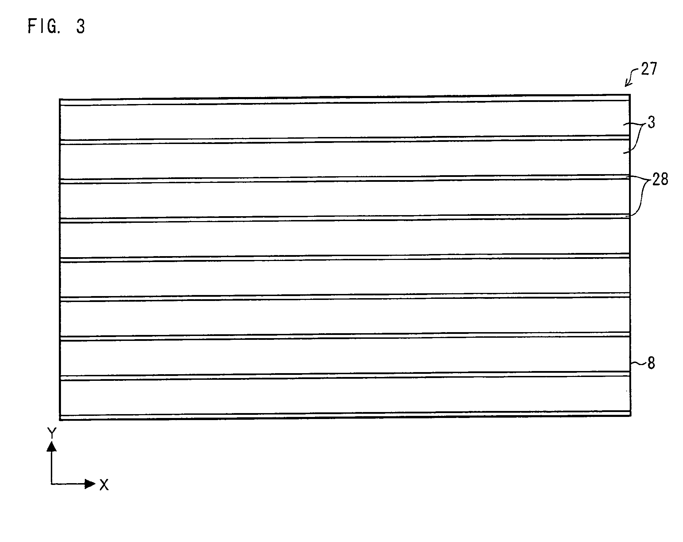

   Fig. 3 is a plane drawing schematically showing a configuration of a light-guiding plate included in the liquid crystal display device.
Fig. 4

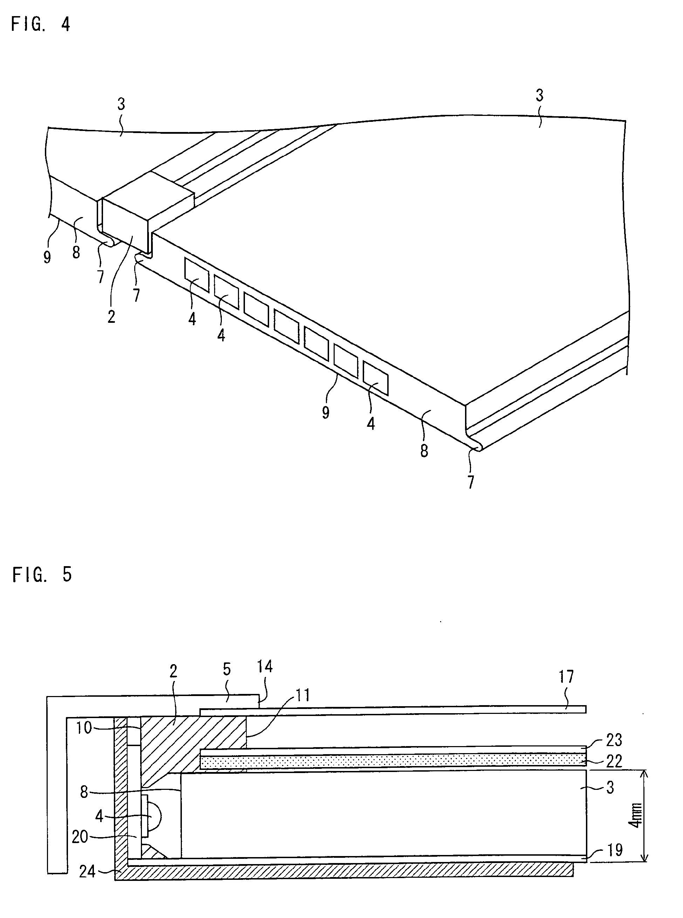

   Fig. 4 is a perspective drawing showing a light-shielding member provided at the light-guiding plate.
Fig. 5
   Fig. 5 is a cross sectional drawing showing a configuration of the light-shielding member provided at the light-guiding plate taken along an X-axis direction.
Fig. 6

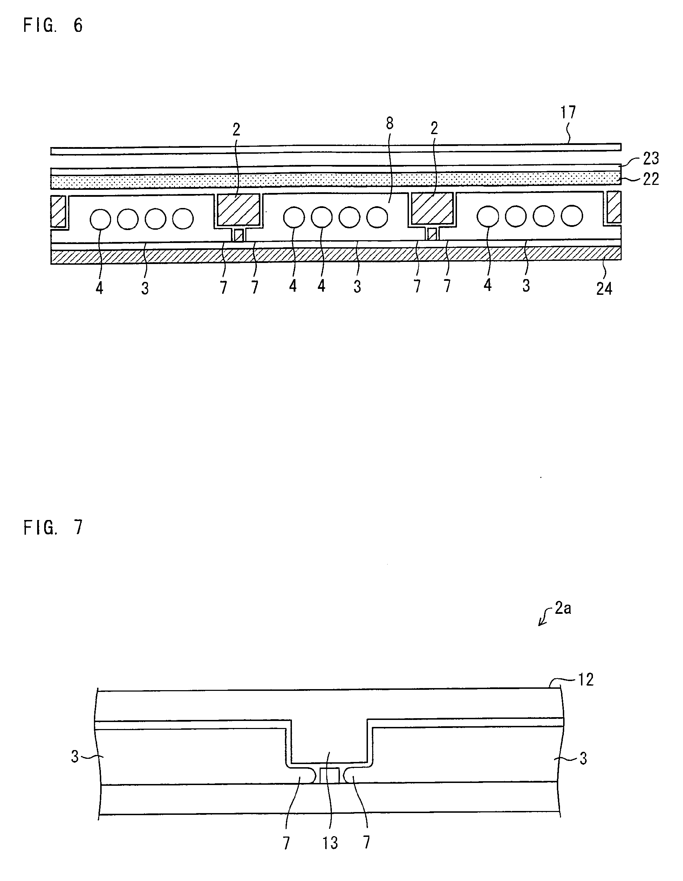

   Fig. 6 is a cross sectional drawing showing a configuration of the light-shielding member provided at the light-guiding plate taken along a Y-direction.
Fig. 7
   Fig. 7 is a cross sectional drawing showing a configuration of another light-shielding member provided at the light-guiding plate taken along a Y-axis direction.
Fig. 8

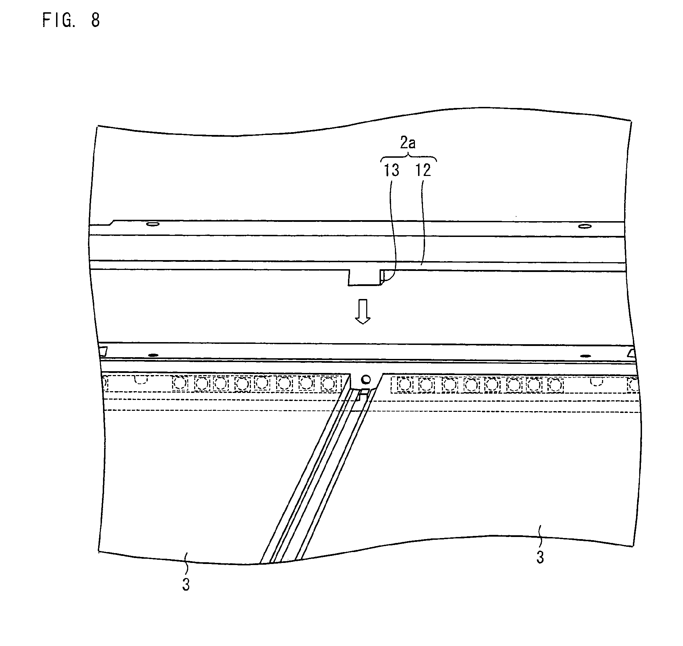

   Fig. 8 is a perspective drawing showing how to fit said another light-shielding member in the light-guiding plate.
Fig. 9

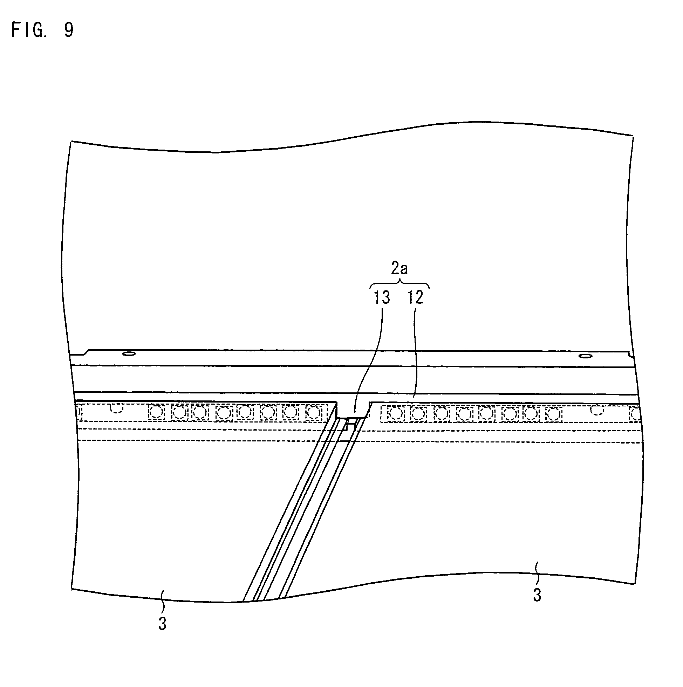

   Fig. 9 is a perspective drawing showing how said another light-shielding member has been fit in the light-guiding plate.

### Description of Embodiments

Fig. 1 is an elevational drawing showing an outer appearance of a liquid crystal display device (electronic device) 15 in accordance with an embodiment of the present invention. Fig. 2 is an exploded perspective drawing showing a configuration of the liquid crystal display device 15. As shown in Fig. 2, the liquid crystal display device 15 includes a chassis 16, a light source module 1, a liquid crystal panel 17, and a bezel 18 which are positioned in this order from the bottom. The light source module 1 includes a reflecting sheet 19 serving as a reflecting plate, LEDs (Light Emitting Diodes) 4 serving as light sources, an LED substrate 20, a reflector 21, a light-guiding plate 27, a diffusing plate 22, and optical sheets 23.

Fig. 3 is a plane drawing schematically showing a configuration of the light-guiding plate 27 included in the liquid crystal display device 15. The liquid crystal display device 15 suffers from blurring of a moving image compared with a CRT (Cathode-Ray Tube) display device. That is, a CRT display device is designed such that between a light emitting period of a pixel in one frame and a light emitting period of the pixel in a next frame, there is provided a non-light emitting period during which the pixel does not emit light, and consequently a viewer is less likely to sense an afterimage. In contrast thereto, the liquid crystal display device 15 is designed as a hold-type without such a non-light emitting period, and consequently a viewer senses an afterimage. The viewer recognizes the afterimage as blurring of a moving image.

In order to solve this problem, for the liquid crystal display device 15 of a backlight type, there is proposed backlight blinking in which the light source module 1 includes a plurality of backlights and the plurality of backlights are sequentially turned off in accordance with timing of application of video signals on the liquid crystal panel 17 so as to insert black frame between image displays. This realizes a quasi-impulse type display, thereby reducing a sense of an afterimage.

In order to carry out backlight blinking, the light source module 1 in accordance with the present embodiment is designed such that the light-guiding plate 27 consists of a plurality of light-guiding members 3 aligned in parallel with each other in a long side direction with a gap 28 between adjacent ones of the light-guiding members 3 as shown in Fig. 3. In consideration of thermal expansion and production tolerance of the light-guiding members 3, the gap 28 is required to have a width of approximately 1-2 mm for example.

Fig. 4 is a perspective drawing showing a light-shielding member 2 provided at the light-guiding members 3. Fig. 5 is a cross sectional drawing showing a configuration of the light-shielding member 2 provided at the light-guiding members 3 taken along an X-axis direction. Fig. 6 is a cross sectional drawing showing a configuration of the light-shielding member 2 provided at the light-guiding members 3 taken along a Y-direction.

The light-guiding members 3 are provided on the reflecting sheet 19 mounted on a radiator plate 24. An end face 8 of each light-guiding member 3 has a substantially T-shape. Each light-guiding member 3 has a central portion 9 having a substantially rectangular shape and side edges 7 which are positioned at both ends of the central portion 9 and which are thinner than the central portion 9. Since the end face 8 of the light-guiding member 3 has substantially a T-shape, it is possible to use the side edges 7 for fixing the light-guiding member 3.

The LED substrate 20 is fixed to the radiator plate 24 in such a manner as to face the end face 8 of each light-guiding member 3. A plurality of LEDs 4 are fixed to the LED substrate 20 in such a manner as to face the end face 8 of each light-guiding member 3 and to be along a long side direction of the LED substrate 20 with a predetermined distance between adjacent ones of the plurality of LEDs 4. Light from the LED 4 is incident to the light-guiding member 3 via the end face 8 and is radiated to the liquid crystal panel 17 via the diffusing plate 22 and the optical sheets 23.

Between adjacent ones of the light-guiding members 3, there is provided the light-shielding member 2 for preventing light from the LED 4 from leaking into a gap between said adjacent ones of the light-guiding members 3. The light-shielding member 2 is positioned on side edges 7 of adjacent light-guiding members 3 which side edges 7 face each other. The light-shielding member 2 may have substantially a rectangular solid shape as shown in Fig. 4 or may have a substantially T-shaped cross section as shown in Fig. 6.

As shown in Fig. 5, the light-shielding member 2 is designed such that one end 10 of the light-shielding member 2 is positioned on the LED substrate 20 to correspond to the LED 4 on the LED substrate 20, and the other end 11 is positioned to be between the end face 8 of the light-guiding member 3 and an end face 14 of a front cabinet 5. The thickness of the light-guiding member 3 and the thickness of the reflecting sheet 19 are summed up to approximately 4 mm.

Fig. 7 is a cross sectional drawing showing a configuration of another light-shielding member 2a provided at the light-guiding plates 3 taken along a Y-axis direction. The light-shielding member 2a consists of: a base portion 12 which is bar-shaped and has a rectangular cross section and which crosses over a plurality of light-guiding members 3 in a direction perpendicular to a long side direction of the light-guiding members 3; and convex portions 13 each of which has a convex cross section and each of which protrudes from the base portion 12 to fit in a gap between adjacent ones of the light-guiding members 3. The base portion 12 may serve as the reflector 21 (Fig. 2).

Fig. 8 is a perspective drawing showing how to fit the light-shielding member 2a in the light-guiding members 3. Fig. 9 is a perspective drawing showing how the light-shielding member 2a has been fit in the light-guiding members 3. As shown in Figs. 8 and 9, onto a plurality of light-guiding members 3 aligned in parallel with each other with a predetermined gap between adjacent ones of the plurality of light-guiding members 3, the light-shielding member 2a is put down in such a manner that each of the convex portions 13 fits in a gap between adjacent ones of the plurality of light-guiding members 3. Since a plurality of convex portions 13 of the light-shielding member 2a are fit in corresponding gaps at one time, this embodiment has a high fabrication ratio. Further, in this embodiment, the convex portions 13 of the light-shielding member 2a may be used for positioning the light-guiding members 3.

An explanation was made above as to a case where light from the LED 4 is incident to one end face 8 of the light-guiding member 3. However, the present invention is not limited to this case. LED may be provided at both end faces of the light-guiding member 3 so that light is incident to both end faces of the light-guiding member 3.

An explanation was made above as to a case where a cross section of the light-guiding member 3 taken along a direction perpendicular to a long side direction of the light-guiding member 3 is designed such that both side edges 7 of the cross section are thinner than the central portion 9 of the cross section. However, the present invention is not limited to this case. It is only required that at least one side edge of a cross section of the light-guiding member 3 taken along a direction perpendicular to the long side direction of the light-guiding member 3 is thinner than the other side edge or a central portion of the cross section.

It is preferable to arrange the light source module in accordance with the present embodiment in such a manner as to further include a front cabinet for covering both ends of each of the plurality of light-guiding members, one end of the light-shielding member being positioned to correspond to the light source, and the other end of the light-shielding member being positioned to be between an end face of the light-guiding member and an end face of the front cabinet.

With the arrangement, the other end of the light-shielding member is positioned inward from the end face of the front cabinet, and consequently the outer appearance of the light-shielding member is blocked by the front cabinet and is not viewed from the front of the liquid crystal display device. Accordingly, the outer appearance of the liquid crystal display device is not impaired. Further, since one end of the light-shielding member is positioned to be closer to an LED than to an end face of the light-guiding member, it is possible to excellently prevent LED light from leaking from a gap between light-guiding members.

It is preferable to arrange the light source module in accordance with the present embodiment such that the light-shielding member is positioned on side edges of adjacent ones of the plurality of light-guiding members which side edges face each other.

With the arrangement, it is possible to effectively prevent leakage of light passing through a space above the side edges.

It is preferable to arrange the light source module in accordance with the present embodiment such that the light-shielding member has a base portion which crosses over the plurality of light-guiding members and convex portions each of which protrudes from the base portion to fit in a gap between adjacent ones of the plurality of light-guiding members.

With the arrangement, a fabrication ratio of the light-shielding member is improved.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

The present invention is applicable to a light source module including a plurality of light-guiding members aligned in parallel with each other in a long side direction of the plurality of light-guiding members with a gap between adjacent ones of the plurality of light-guiding members, and a plurality of light sources each for causing light to be incident to at least one end face of the light-guiding member in the long side direction.

### Reference Signs List

- 1.: light source module
- 2, 2a.: light-shielding member
- 3.: light-guiding member
- 4.: LED (light source)
- 5.: front cabinet
- 7.: side edge
- 8.: end face
- 9.: central portion
- 10.: one end
- 11.: the other end
- 12.: base portion
- 13.: convex portion
- 14.: end face
- 15.: liquid crystal display device (electronic device)
- 16.: chassis
- 17.: liquid crystal panel
- 18.: bezel
- 19.: reflecting sheet
- 20.: LED substrate
- 21.: reflector
- 22.: diffusing plate
- 23.: optical sheets
- 24.: radiator plate
- 27.: light-guiding plate
- 28.: gap

## Claims

1. uiding plate
A light source module, comprising:
a plurality of light-guiding members aligned in parallel with each other in a long side direction of the plurality of light-guiding members with a gap between adjacent ones of the plurality of light-guiding members, and
a plurality of light sources each for causing light to be incident to at least one end face of the light-guiding member in the long side direction,
a cross section of the light-guiding member taken along a direction perpendicular to the long side direction of the light-guiding member being designed such that at least one side edge of the cross section is thinner than the other side edge or a central portion of the cross section, and
between adjacent ones of the plurality of light-guiding members, there being provided a light-shielding member for preventing light from the light source from leaking into a gap between said adjacent ones of the plurality of light-guiding members.

2. The light source module as set forth in claim 1, further comprising a front cabinet for covering both ends of each of the plurality of light-guiding members,
one end of the light-shielding member being positioned to correspond to the light source, and
the other end of the light-shielding member being positioned to be between an end face of the light-guiding member and an end face of the front cabinet.

3. and an end face of the front cabinet. The light source module as set forth in claim 1, wherein the light-shielding member is positioned on side edges of adjacent ones of the plurality of light-guiding members which side edges face each other.

4. ges face each other. The light source module as set forth in claim 1, wherein the light-shielding member has a base portion which crosses over the plurality of light-guiding members and convex portions each of which protrudes from the base portion to fit in a gap between adjacent ones of the plurality of light-guiding members.

5. An electronic device, comprising a light source module as set forth in any one of claims 1-4.
